# EUROPÄISCHE PATENTSCHRIFT

(11) **EP 3 665 603 B1**
(45) Veröffentlichungstag und Bekanntmachung des Hinweises auf die Patenterteilung: **30.03.2022**
(21) Anmeldenummer: 18785834.5
(22) Anmeldetag: 25.09.2018
(51) Int. Cl.: G06F 21/55, H04L 29/06

(54) **VERFAHREN UND VORRICHTUNG ZUM UNMITTELBAREN UND RÜCKWIRKUNGSFREIEN ÜBERTRAGEN VON LOG-NACHRICHTEN**
METHOD AND APPARATUS FOR DIRECT AND FEEDBACK-FREE TRANSMISSION OF LOG MESSAGES
PROCÉDÉ ET DISPOSITIF DE TRANSMISSION DIRECTE ET SANS RETOUR DES MESSAGES DE JOURNAL

(30) Priorität: 28.09.2017 DE 102017217301
(43) Veröffentlichungstag der Anmeldung: 17.06.2020
(73) Patentinhaber: Siemens Mobility GmbH, 81739 München (DE)
(72) Erfinder: FALK, Rainer, 85586 Poing (DE); SEIFERT, Matthias, 21244 Buchholz (DE); WIMMER, Martin, 85579 Neubiberg (DE)
(86) Internationale Anmeldenummer: PCT/EP2018/075873
(87) Internationale Veröffentlichungsnummer: WO 2019/063511

(56) Entgegenhaltungen:
- WO-A1-2016/156063
- DE-A1-102014 226 398
- DE-A1-102015 200 279

## Beschreibung

Die Erfindung betrifft ein Verfahren und eine Vorrichtung zum unmittelbaren und rückwirkungsfreien Übertragen von Log-Nachrichten aus mindestens einem ersten Netzwerk, beispielsweise mit hoher Sicherheitsanforderung, in ein zweites Netzwerk, beispielsweise mit geringerer Sicherheitsanforderung, zur Echtzeit-Analyse.

In großen Steuerungsnetzwerken mit einer Vielzahl von Geräten bilden Log-Nachrichten der jeweiligen Geräte ein wichtiges Werkzeug für die Diagnose und Überwachung eines Systems. Log-Nachrichten können Information über Aktionen, Prozesse, Systemzustände und/oder Änderungen dieser Information umfassen. Einzelne Log-Nachrichten oder Log-Daten können in einer Log-Datei zusammengefasst werden. Dazu werden die von den Geräten übermittelten einzelnen Log-Nachrichten nacheinander in eine Datei geschrieben und zusammengefasst und bei der Auswertung ausgelesen. Somit ist zwischen einzelnen Log-Nachrichten und Log-Dateien zu unterscheiden.

Die einzelnen Log-Nachrichten werden üblicherweise von Geräten selbst erzeugt und typischerweise an einen Log-Server gesendet. Eine Log-Datei, ähnlich einer Diagnosedatei, muss in einem weiteren Prozessschritt erzeugt werden. Dabei kommt es zu einem, teilweise erheblichen, zeitlichen Versatz zwischen der Ausgabe einer Log-Nachricht von einem Gerät und der Auswertung der Log-Nachricht in einem Log-Server. Paralleles Schreiben und Lesen von Log-Dateien hingegen birgt eine hohe Fehleranfälligkeit, wie z.B. eine falsche Reihenfolge von Einträgen oder dem Auslesen von unvollständigen Log-Nachrichten.

Der Transfer von Log-Nachrichten auf der Basis von Log-Dateien ist folglich aufwendig und nicht für die Echtzeit-Überwachung eines Steuerungsnetzwerks geeignet. Im Fall von Echtzeitanalysen müssen die Log-Nachrichten jedoch zeitnah und effizient nach ihrer Erzeugung ausgewertet werden können, um beispielsweise eine Fehlfunktion zeitnah zu erkennen und automatisch eine Gegenmaßnahme einleiten zu können. Weitere Anwendungsfälle umfassen zum Beispiel eine zeitkritische Fehleranalyse und ein optimiertes Wartungsmanagement.

Eine Verbindung zu sicherheitskritischen Steuerungsnetzwerken, wie zum Beispiel von industrielle Anlagen oder Bahnnetzwerken, unterliegt strengen Sicherheitsanforderungen. Deshalb werden bei sicherheitskritischen Netzwerken üblicherweise Log-Dateien zur Diagnose in ein zweites, gegebenenfalls zentrales, Netzwerk übertragen, da nur eingeschränkter Zugriff auf das Steuerungsnetzwerk besteht bzw. erlaubt ist. Es bestehen darüber hinaus oft sicherheitstechnische Anforderungen bezüglich des Datenaustausches zwischen einem isolierten Netzwerk in einer Sicherheitszone und einem externen, eventuell offenen, Netzwerk. Es soll dabei sichergestellt sein, dass kein unzulässiger Datenstrom in das sicherheitskritische Netzwerk hineingeht. Die Übertragung von Daten aus dem sicherheitskritischen Netzwerk hinaus wird deshalb oft unidirektional realisiert. Dazu werden zum Beispiel Netzwerk-Taps oder Datendioden benutzt, die die rückwirkungsfreie Kopplung zweier Netzwerke gewährleisten. Allerdings sind diese Netzwerkkomponenten aufwendig und teuer. Somit können sicherheitskritische Netzwerke oftmals nicht einfach mit offenen Netzwerken verbunden werden. Die Kopplung der Netzwerke über eine filternde Firewall oder über ein virtuelles privates Netzwerk, kurz VPN, erfüllt nicht die Bedingung der Rückwirkungsfreiheit, d.h. die Kopplung der beiden Netzwerke miteinander ohne dabei Daten in das sicherheitskritische Netzwerk einzubringen. Daraus entstehen besondere Anforderungen an die Extraktion von Log-Nachrichten aus dem sicherheitskritischen Netzwerk für die Analyse.

Es sind Cloud-Lösungen bekannt, um zentral Log-Daten zu speichern und zu analysieren. Dieses Verfahren beinhaltet typischerweise aber eine Konvertierung der Log-Daten in ein geeignetes Format, was wiederum eine Konvertierung auf der Empfängerseite erfordert. Außerdem muss in der Regel das System im sicherheitskritischen Netzwerk entsprechend mittels entsprechender Hardware und/oder Software angepasst werden, um die Log-Nachrichten an die Cloud zu senden. Diese Anpassungen sind aufwendig und die Cloud-Lösung ist aufgrund der Daten-Konvertierung für eine Echtzeitanalyse von Log-Nachrichten nicht praktikabel.

In PCT/EP2016/055915 wird eine Einwegkoppelvorrichtung beschrieben, die erlaubt, Daten aus einem sicherheitskritischen Netzwerk in ein Netzwerk mit geringerer Sicherheitsanforderung zu übertragen. Die Daten werden über eine separate Leitungsschleife einer Anfrageeinrichtung im ersten Netzwerk übertragen und parallel von einer Mithöreinrichtung mitgehört. Solche Datenkopierer oder Netzwerk-Taps sind aus Netzwerküberwachungssystemen bekannt. Die mitgehörte beziehungsweise kopierte Datenkommunikation wird in das Diagnosenetzwerk übermittelt. Dadurch wird die erforderliche Rückwirkungsfreiheit gewährleistet. Die Anfrageeinrichtung im Netzwerk mit hoher Sicherheitsanforderung kann eine Konvertierungseinheit zur Formatkonvertierung aufweisen. Somit ist die Datenhandhabung flexibel und kann direkt für die Auswertung im zweiten Netzwerk angepasst werden. Außerdem kann die Anfrageeinrichtung eine Speichereinheit zum Speichern der Daten aufweisen, so dass das Mithören und die Übermittlung nicht kontinuierlich verlaufen müssen. In DE102015200279A1 wird ebenfalls eine Einwegkoppelvorrichtung offenbart.

Im Stand der Technik wird allerdings keine schnelle und zeitkritische Übermittlung einzelner Log-Nachrichten, die außerdem rückwirkungsfrei erfolgen soll, beschrieben. Das Schreiben und Lesen in eine Log-Datei und gegebenenfalls Konvertieren der Datei in ein anderes Dateiformat zur Übermittlung erfüllt nicht die Anforderung einer Echtzeitanalyse von Log-Nachrichten zur Überwachung von sicherheitskritischen Netzwerken. Daher würde eine Fehlfunktion oder eine Manipulation erst mit einer gewissen zeitlichen Verzögerung erkannt werden. Dadurch können auch Gegenmaßnahmen erst verzögert eingeleitet werden. Fehlerhafte Steuerungsfunktionen können daher für einen relativ langen Zeitraum erfolgen.

Es ist somit die Aufgabe der vorliegenden Erfindung, eine einfache und kostengünstige Möglichkeit zu schaffen, ein System mit Hilfe dessen Log-Nachrichten in Echtzeit zu überwachen, ohne dabei in das System selbst einzugreifen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zum unmittelbaren und rückwirkungsfreien Übertragen von Log-Nachrichten aus mindestens einem ersten Netzwerk in ein zweites Netzwerk, weist folgende Verfahrensschritte auf:
- die Log-Nachrichten werden im ersten Netzwerk von mindestens einem Gerät an einen ersten Log-Server übermittelt,
- die Log-Nachrichten werden kontinuierlich mittels einer Mithöreinrichtung mitgehört und die Log-Nachrichten werden einzeln und unverzüglich an das zweite Netzwerk weitergeleitet,
- jede einzelne, abgehörte Log-Nachricht wird über eine Einweg-Datenübertragungseinheit rückwirkungsfrei vom ersten Netzwerk in das zweite Netzwerk übertragen
   und
- die Log-Nachrichten werden im zweiten Netzwerk einem zweiten Log-Server bereitgestellt.

Das erfindungsgemäße Verfahren ermöglicht das zeitnahe und unidirektionale, d.h. rückwirkungsfreie, Übertragen einzelner Log-Nachrichten von mindestens einem ersten Netzwerk, mit z.B. hoher Sicherheitsanforderung, in ein zweites Netzwerk, mit z.B. geringerer Sicherheitsanforderung. Es wird verlässlich sichergestellt, dass das zweite Netzwerk eine Steuerungsfunktion oder Datenübertragung im ersten Netzwerk nicht über den unidirektionalen Datenübertragungsweg beeinflussen kann. Dabei erfolgt die Bereitstellung von Log-Daten trotz der Rückwirkungsfreiheit zeitnah, d.h. unmittelbar. Das zweite Netzwerk muss dabei nicht notwendigerweise direkt angebunden sein, sondern kann auch einen Fernzugang haben. Die Log-Nachrichten werden einzeln behandelt, d.h. sie werden nicht in eine Datei gespeichert, aus der sie für eine Analyse wieder ausgelesen werden müssen. Sobald die Log-Nachrichten von den Geräten ausgegeben werden, werden sie an einen ersten Log-Server im ersten System gesendet. Diese Übermittlung ist typischerweise bereits in Steuerungssystemen eingerichtet. Folglich kann, um das Ziel, Log-Nachrichten aus einem System zu analysieren, zu erreichen, vorteilhafterweise direkt an diese Übertragung angeknüpft werden. Die Log-Nachrichten werden dabei kontinuierlich mitgehört. Dazu wird eine Mithöreinrichtung benutzt, welche eine Kopie des Nachrichtenstroms erstellt. Jede einzelne, abgehörte Log-Nachricht wird über eine Einweg-Datenübertragungseinheit an einen zweiten Server im zweiten Netzwerk übertragen. Dieser Verfahrensschritt gewährleistet die Rückwirkungsfreiheit, d.h. verhindert unzulässigen Datenstrom in das erste, gegebenenfalls sicherheitskritische, Netzwerk hinein.

Außerdem muss die Mithöreinrichtung nicht in das bestehende System integriert werden, also z.B. keine neue Software installiert werden. Dieses Vorgehen ist zum einen mit wenig Aufwand verbunden und kostengünstig, zum anderen dazu geeignet, die Integrität eines Systems zu gewährleisten.

Des Weiteren erfolgt der Datentransfer nicht dateibasiert, d.h. die Log-Nachrichten können direkt und unmittelbar übertragen und analysiert werden. Die Log-Nachrichten werden im zweiten Netzwerk einem zweiten Log-Server bereitgestellt. Somit liegt zeitgleich eine identische Kopie der Log-Nachrichten im Diagnosenetzwerk vor, die direkt analysiert werden kann.

In einer vorteilhaften Ausführungsform wird der Nachrichtenstrom von Geräten an den ersten Log-Server im ersten Netzwerk, welcher Log-Nachrichten umfasst, ohne zeitliche Verzögerung mitgehört.

Der Nachrichtenstrom von den Geräten zum ersten Log-Server im ersten Netzwerk kann Log-Nachrichten und weitere Nachrichten, wie z.B. Statusmeldungen oder Ping-Anfragen, umfassen. Die Mithöreinrichtung, die einzelne Log-Nachrichten identisch kopiert, wird kontinuierlich betrieben. Folglich kann der Nachrichtenstrom von den Geräten zum Log-Server durchgehend und ohne zeitliche Verzögerung mitgehört werden. Da außerdem keine Log-Datei geschrieben werden muss, ermöglicht diese Anordnung eine schnelle und einfache Übertragung der Log-Nachrichten in das zweite Netzwerk und ist somit für die Echtzeitanalyse von Log-Nachrichten geeignet.

In einer vorteilhaften Ausführungsform werden die mitgehörten und übermittelten Log-Nachrichten im zweiten Netzwerk ausgewertet und/oder es wird eine Integritätsprüfung der Log-Nachrichten durchgeführt.

Die Log-Nachrichten werden gemäß der Erfindung mit der Mithöreinrichtung unmittelbar abgehört. Es ist keine Konvertierung der Log-Nachrichten oder andere Verarbeitung notwendig. Die Kopie dieser Log-Nachrichten wird in das zweite Netzwerk zur Diagnose übermittelt und analysiert. In sicherheitskritischen Steuerungsnetzwerken ist das Einbringen von Analysegeräten und -software oft nicht ohne Weiteres möglich, da die Geräte oder Netzwerke in sich geschlossen sind oder Veränderungen die Integrität des Netzwerks verletzen würden. Daher ist es praktikabel, eine Auswertung der Log-Nachrichten von den Steuergeräten extern durchzuführen. Dies hat den Vorteil, dass mit aktueller Software, die nicht für das Sicherheitsnetz zertifiziert oder in das Sicherheitsnetzwerk eingebracht werden muss, die Log-Nachrichten überwacht werden können.

Außerdem kann eine Integritätsprüfung erfolgen, um den Ursprung und die Vollständigkeit der Log-Nachrichten zu überprüfen. Die Integritätsprüfung kann beispielsweise über eine kryptographische Prüfsumme erfolgen.

In einer vorteilhaften Ausführungsform werden, abhängig vom Ergebnis der Auswertung der Log-Nachrichten im zweiten Netzwerk, Maßnahmen im ersten Netzwerk eingeleitet.

Bei der Echtzeitanalyse von Log-Nachrichten kann eine schnelle Reaktion auf Fehlermeldungen erfolgen. Durch die unmittelbare Übertragung der einzelnen Log-Nachrichten und die dadurch zeitnahe Analysemöglichkeit im zweiten Netzwerk kann schnell auf Meldungen reagiert werden. Die maximale Zeitverzögerung ist bei dem beschriebenen Verfahren gering und vorhersagbar. Damit kann verlässlich gewährleistet werden, dass eine Reaktion spätestens nach einer ermittelten maximalen zeitlichen Verzögerung aufgrund der notwendigen Nachrichtenübertragung erfolgt.

Beispielsweise kann ein breitgestelltes Steuersignal einen Fehlerbetriebsmodus im ersten Netzwerk aktivieren. Es kann außerdem eine Netzwerkverbindung im ersten Netzwerk unterbrochen werden oder ein Steuergerät des ersten Netzwerks in einen eigensicheren Betriebszustand versetzt werden.

In einer vorteilhaften Ausführungsform wird der Nachrichtenstrom an einer Kommunikationsverbindung zwischen mindestens einem Gerät und dem ersten Log-Server im ersten Netzwerk abgehört.

Das erfindungsgemäße Verfahren greift auf das Vorhandensein einer Kommunikationsverbindung zwischen den Geräten und dem ersten Log-Server im ersten Netzwerk zurück, über die ein Nachrichtenstrom übermittelt wird, der Log-Nachrichten umfasst. Vorteilhafterweise kann dieser Nachrichtenstrom mit einer Mithöreinrichtung direkt abgehört werden, so dass unmittelbar eine Kopie der Log-Nachrichten gemacht wird. Die Mithöreinrichtung kann beispielsweise an die bestehende Kommunikationsverbindung angebracht werden. Somit muss keine neue Netzwerkkomponente oder Software in das bestehende Netzwerk eingebracht werden, die die Log-Nachrichten aufnimmt, ggf. bearbeitet und anschließend weiterleitet. Die Mithöreinrichtung kann parallel zu Prozessen im Netzwerk betrieben werden und stört diese nicht. Damit wird weiterhin die Integrität des Netzwerks nicht verletzt.

In einer vorteilhaften Ausführungsform werden aus dem mitgehörten Nachrichtenstrom die Log-Nachrichten mittels eines Filters erkannt und extrahiert.

Der abgehörte Nachrichtenstrom zwischen Geräten und erstem Log-Server im ersten Netzwerk wird mittels der Mithöreinrichtung kopiert und unmittelbar und rückwirkungsfrei über eine Einweg-Datenübertragungseinheit in das zweite Netzwerk übertragen. Um dort die Log-Nachrichten auszuwerten, müssen diese erkannt und extrahiert werden. Dies erfolgt über einen Filter, der die Log-Nachrichten aus einem allgemeinen Datenverkehr extrahiert. Dabei müssen die abgehörten Log-Nachrichten nicht in ein anderes Format konvertiert werden. Nach der Filterung und Extraktion der Log-Nachrichten können diese an einen zweiten Log-Server im zweiten Netzwerk, z.B. zur Analyse, weitergeleitet werden.

In einer vorteilhaften Ausführungsform werden die extrahierten Log-Nachrichten nach Relevanz gefiltert.

Nachdem die Log-Nachrichten aus dem allgemeinen Nachrichtenstrom erkannt und extrahiert wurden, können sie mittels eines weiteren Filters nach Relevanz gefiltert werden. Beispielsweise können die eingegangenen Nachrichten nach dem Schweregrad eines Fehlers gefiltert werden. Dies hat den Vorteil, dass eine erste Selektion der Log-Nachrichten durchgeführt wird, um eine noch effizientere Auswertung zu ermöglichen.

In einer weiteren vorteilhaften Ausführungsform werden die Log-Nachrichten über eine Leitungsschleife von einer ersten Schnittstelle zu einer zweiten Schnittstelle des ersten Log-Servers übermittelt und an der Leitungsschleife mit einer Mithöreinrichtung mitgehört.

In dieser Ausführungsform der Erfindung wird implizit eine erste Filterung der Log-Nachrichten erzielt. Von den Geräten im ersten Netzwerk geht ein Nachrichtenstrom an den ersten Log-Server. Dieser Nachrichtenstrom umfasst auch Log-Nachrichten. Anstatt den Nachrichtenstrom zwischen den Geräten und dem ersten Log-Server an einer Kommunikationsverbindung mitzuschneiden, wird in dieser Ausführungsform eine zusätzliche Kommunikationsverbindung des Log-Servers mit sich selbst mitgehört. Die Log-Nachrichten werden vom ersten Log-Server über eine interne Leitungsschleife übermittelt. Die Leitungsschleife stellt eine Verbindung zwischen zwei Schnittstellen des Log-Servers dar. Die Anordnung ist effizient, da vom ersten Log-Server über die Leitungsschleife nur Log-Nachrichten übermittelt werden. Der Nachrichtenstrom wird somit bereits im ersten Netzwerk nach Log-Nachrichten gefiltert. Ein weiterer Vorteil betrifft die Ver- und Entschlüsselung von Log-Nachrichten. Oft werden Log-Nachrichten von Geräten an den Log-Server verschlüsselt übermittelt und dort entschlüsselt. Die Übermittlung der Log-Nachrichten über die Leitungsschleife kann so konfiguriert sein, dass dort bereits entschlüsselte Log-Nachrichten übertragen werden. Die Mithöreinrichtung hört dann nur die entschlüsselten Log-Nachrichten mit. So wird auf eine einfach Weise erreicht, dass im zweiten Netzwerk keine Entschlüsselung mehr vorgenommen werden muss.

In einer vorteilhaften Ausführungsform hat die zweite Schnittstelle der Leitungsschleife des ersten Log-Servers eine Adresse des zweiten Log-Servers als Zieladresse.

Die Leitungsschleife stellt eine Verbindung zwischen zwei Schnittstellen des Log-Servers dar. Als Zieladresse für die Übermittlung kann die Adresse des zweiten Log-Servers im zweiten Netzwerk angegeben werden. Dies hat den Vorteil, dass die über die Leitungsschleife übermittelten Log-Nachrichten bereits beim Senden an der ersten Schnittstelle der Leitungsschleife eine Information über das Ziel im zweiten Netzwerk erhalten. Allerdings erfolgt die Übermittlung an den zweiten Log-Server nicht direkt, da dies die erforderliche Rückwirkungsfreiheit nicht gewährleisten würde. Die zweite Schnittstelle der Leitungsschleife erhält als Zieladresse innerhalb des ersten Log-Servers die Adresse des zweiten Log-Servers, so dass der erste Log-Server die Log-Nachrichten über die Leitungsschleife an sich selbst übermittelt. Diese Übermittlung der Log-Nachrichten über die Leitungsschleife wird zeitgleich von der Mithöreinrichtung mitgehört. So kopiert die Mithöreinrichtung auch die Information über die Zieladresse der Log-Nachrichten. Da der Transfer der Log-Nachrichten über die Leitungsschleife bereits die Adresse des zweiten Log-Servers als Zieladresse hat und diese Information ebenso mitgehört wird, können die Log-Nachrichten im zweiten Netzwerk direkt an den zweiten Log-Server übertragen werden. Es ist keine Konvertierung der Adressinformation oder Zwischenspeicherung der Log-Nachrichten nötig. Durch dieses Verfahren wird eine rückwirkungsfreie und unmittelbare Übertragung der Log-Nachrichten in das zweite Netzwerk erreicht. Außerdem ist eine Filterung nach Log-Nachrichten im zweiten Netzwerk wie in der weiteren Ausführungsform des erfindungsgemäßen Verfahrens nicht notwendig, da lediglich Log-Nachrichten über die Leitungsschleife übermittelt und dort abgehört werden.

Die erfindungsgemäße Vorrichtung zum unmittelbaren und rückwirkungsfreien Übertragen von Log-Nachrichten aus mindestens einem ersten Netzwerk in ein zweites Netzwerk umfasst eine Mithöreinrichtung und eine Einweg-Datenübertragungseinheit, wobei die Mithöreinrichtung derart ausgebildet ist, die einzelnen Log-Nachrichten im ersten Netzwerk kontinuierlich mitzuhören und die Log-Nachrichten einzeln und unverzüglich an das zweite Netzwerk weiterzuleiten und wobei die Einweg- Datenübertragungseinheit derart ausgebildet ist, jede einzelne, abgehörte Log-Nachricht rückwirkungsfrei vom ersten Netzwerk in das zweite Netzwerk zu übertragen.

Die Vorrichtung zum unmittelbaren und rückwirkungsfreien Übertragen von Log-Nachrichten zum Beispiel aus einem sicherheitskritischen in ein offenes Diagnosenetzwerk ist minimal-invasiv. Da lediglich eine Mithöreinrichtung den Nachrichtenstrom mithört, aber nicht verändert, muss keine weitere Komponente oder spezielle Software in das System eingebracht werden. Damit ist die Integrität des Systems und des ersten Netzwerks geschützt. Die Einweg-Datenübertragungseinheit ist unidirektional und gewährleistet die Rückwirkungsfreiheit. Die Vorrichtung ist folglich für das System im ersten Netzwerk unsichtbar. Es sind keine Veränderungen am System nötig, die Prozesse stören oder beeinflussen können. Die Mithöreinrichtung wird kontinuierlich betrieben, so dass eine Echtzeit-Analyse der Log-Nachrichten im zweiten Netzwerk möglich ist.

In einer vorteilhaften Ausführungsform ist die erfindungsgemäße Übertragungsvorrichtung derart ausgebildet die beschriebenen Verfahrungsschritte durchzuführen, um eine unmittelbare und rückwirkungsfreie Übertragung von Log-Nachrichten aus einem ersten in ein zweites Netzwerk zu ermöglichen.

In einer vorteilhaften Ausführungsform umfasst die erfindungsgemäße Übertragungsvorrichtung eine im zweiten Netzwerk angeordnete Log-Nachrichten-Extraktionseinheit, die derart ausgebildet ist, aus dem mitgehörten Nachrichtenstrom die Log-Nachrichten mittels eines Filters zu erkennen und zu extrahieren und einem zweiten Log-Server im zweiten Netzwerk bereitzustellen.

Die erfindungsgemäße Übertragungsvorrichtung kann, ohne großen Installationsaufwand und ohne Geräte zu verändern, genutzt werden, um Log-Nachrichten der Geräte zu untersuchen. Das Einbringen von nur einer Mithöreinrichtung oder einem Netzwerk-Tap ist vorteilhafterweise minimal-invasiv: ohne in das erste Netzwerk einzugreifen, wird die Datenkommunikation mitgehört und unidirektional in das zweite Netzwerk übermittelt. Die Filterung nach Log-Nachrichten, die anschließend zur Diagnose an den zweiten Log-Server weitergeleitet werden, erfolgt in der Log-Nachrichten-Extraktionseinheit im zweiten Netzwerk. Man erreicht folglich mit dieser Anordnung die Übertragung einer Kopie der Log-Nachrichten in ein beispielsweise offenes Netzwerk, wo zum Beispiel mit neuester Software eine Analyse durchgeführt werden kann.

Ein weiterer Aspekt der Erfindung betrifft einen Log-Server zum Empfang von Log-Nachrichten von mindestens einem Gerät, wobei der Log-Server eine Leitungsschleife von einer ersten Schnittstelle zu einer zweiten Schnittstelle des Log-Servers umfasst, die derart ausgebildet ist, die Log-Nachrichten einzeln von der ersten Schnittstelle zur zweiten Schnittstelle zu übermitteln, wobei die zweite Schnittstelle eine Adresse eines zweiten Log-Servers als Zieladresse hat und die Leitungsschleife derart ausgebildet ist, dass übermittelte Log-Nachrichten kontinuierlich von der Mithöreinrichtung mithörbar sind.

Geräte in einem Netzwerk übermitteln Log-Nachrichten an einen Log-Server in diesem Netzwerk. Das Mithören von Log-Nachrichten, die über eine Leitungsschleife eines solchen Log-Servers übermittelt werden, ist sehr schnell und effizient. Es muss keine weitere Filterung eines Nachrichtenstroms nach Log-Nachrichten vorgenommen werden, da diese bereits im Log-Server durchgeführt wird. Es wird durch die derart angegebene Zieladresse erreicht, dass die mitgehörten Daten direkt zu einem zweiten Log-Server in einem zweiten Netzwerk übertragen werden können. Des Weiteren muss keine zusätzliche Komponente zur Konvertierung der Log-Nachrichten im ersten Netzwerk integriert werden, was den Installationsaufwand der Übertragungsvorrichtung gering hält.

In einer vorteilhaften Ausführungsform umfasst der Log-Server ein Speichermedium.

Die erfindungsgemäße Übertragungsvorrichtung kann vorteilhafterweise zur Echtzeitanalyse von Log-Nachrichten benutzt werden. Darüber hinaus bietet ein Log-Server mit Speicher die Möglichkeit, die Log-Nachrichten zu archivieren, zu analysieren oder für eine statistische Auswertung zu nutzen.

Ein weiterer Aspekt der Erfindung betrifft ein Computerprogrammprodukt, umfassend Programmcodeteile, die dazu geeignet sind, die Schritte des Verfahrens durchzuführen.

Ausführungsbeispiele des erfindungsgemäßen Verfahrens und Systems sind in den Zeichnungen beispielhaft dargestellt und werden anhand der nachfolgenden Beschreibung näher erläutert. Es zeigen:
Fig. 1 ein Ablaufdiagramm des erfindungsgemäßen Verfahrens zum unmittelbaren und rückwirkungsfreien Übertragen von Log-Nachrichten aus mindestens einem ersten Netzwerk in ein zweites Netzwerk;
Fig. 2 eine schematische Darstellung der erfindungsgemäßen Übertragungsvorrichtung umfassend einen ersten Log-Server mit einer Leitungsschleife;
Fig. 3 ein Log-Server zum Empfang von Log-Nachrichten umfassend eine Leitungsschleife;
Fig. 4 eine schematische Darstellung der erfindungsgemäßen Übertragungsvorrichtung umfassend einer Log-Nachrichten-Extraktionseinheit.

Einander entsprechende Teile sind in allen Figuren mit den gleichen Bezugszeichen versehen.

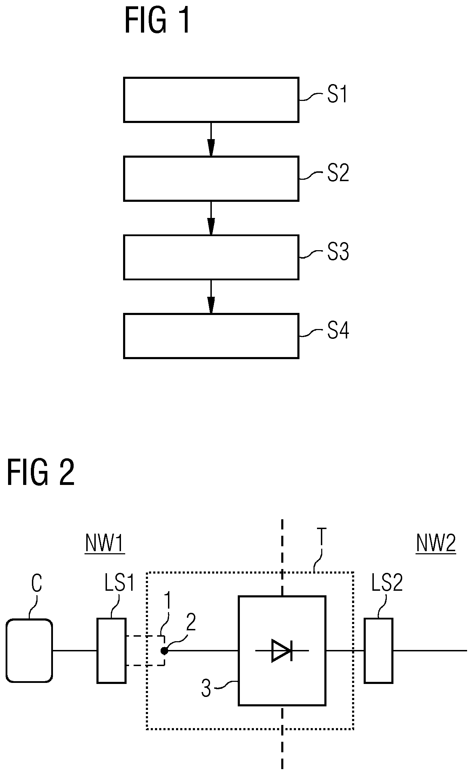

Anhand eines Ablaufdiagramms in Figur 1 wird nun das Verfahren zum unmittelbaren und rückwirkungsfreien Übertragen von Log-Nachrichten aus mindestens einem ersten Netzwerk in ein zweites Netzwerk gezeigt. Im ersten Verfahrensschritt S1, werden die Log- Nachrichten im ersten Netzwerk NW1 von mindestens einem Gerät an einen ersten Log-Server LS1 übermittelt. Log-Nachrichten werden im zweiten Verfahrensschritt S2 mittels einer Mithöreinrichtung 2 kontinuierlich mitgehört und die Log-Nachrichten werden einzeln und unverzüglich an das zweite Netzwerk NW2 weitergeleitet. Das heißt, die Log-Nachrichten werden nicht zunächst in eine Log-Datei geschrieben, sondern einzeln und ohne zeitliche Verzögerung weitergeleitet. Im dritten Verfahrensschritt S3 wird jede einzelne, von der Mithöreinrichtung 2 abgehörte Log-Nachricht über eine Einweg-Datenübertragungseinheit 3 rückwirkungsfrei vom ersten Netzwerk NW1 in das zweite Netzwerk NW2 übertragen. Die Bereitstellung der Log-Nachrichten im zweiten Netzwerk NW2 ist der vierte Verfahrensschritt S4. Dazu kann eine Filterung der Log-Nachrichten über die beschriebene Leitungsschleife 1 des ersten Log-Servers oder über eine Log-Nachrichten-Extraktionseinheit 4 erfolgen.

Figur 2 zeigt eine beispielshafte Ausführungsform der erfindungsgemäßen Übertragungsvorrichtung T zum unmittelbaren und rückwirkungsfreien Übertragen von Log-Nachrichten aus mindestens einem ersten Netzwerk NW1 in ein zweites Netzwerk NW2. Die Log-Nachrichten werden im ersten Netzwerk NW1 von mindestens einem Gerät C eines Systems an den Log-Server LS1 übermittelt. Des Weiteren kann der Nachrichtenstrom vom Gerät zum Log-Server LS1 auch weitere Nachrichten neben den Log-Nachrichten umfassen. Um die Log-Nachrichten herauszufiltern, wird eine interne Leitungsschleife des ersten Log-Servers LS1 eingerichtet oder ein Log-Server mit Leitungsschleife gemäß der Erfindung installiert. Die Filterung nach Log-Nachrichten erfolgt dadurch, dass der erste Log-Server LS1 nur Log-Nachrichten prozessiert und so über die Leitungsschleife 1 nur Log-Nachrichten übermittelt werden. Mit der Mithöreinrichtung 2 wird die Nachrichten-Kommunikation, die über die Leitungsschleife 1 läuft, mitgehört. Die kopierten Log-Nachrichten werden über die Einweg-Datenübertragungseinheit 3 in das zweite Netzwerk NW2 übertragen. Diese Übertragung bedarf somit keiner Konvertierung der Daten, kann unmittelbar erfolgen und verläuft rückwirkungsfrei. Im zweiten Netzwerk NW2 können die Log-Nachrichten an einen zweiten Log-Server LS2 übermittelt werden. Die im zweiten Log-Server LS2 empfangenen Log-Nachrichten werden dann einer Integritätsprüfung unterzogen, ausgewertet und gegebenenfalls archiviert. Zum Beispiel kann anhand der Log-Nachrichten überwacht werden, ob ein bestimmtes Gerät C im ersten Netzwerk NW1 einwandfrei funktioniert. Mit dem erfindungsgemäßen Verfahren zur Übertragung von Log-Nachrichten in Echtzeit kann außerdem eine Fehlfunktion zeitnah diagnostiziert und behoben werden.

Abhängig vom Ergebnis der Auswertung der Log-Nachrichten werden im ersten Netzwerk NW1 Maßnahmen eingeleitet. Dabei kann insbesondere ein Schaltsignal über eine elektrische oder optische Schnittstelle (nicht dargestellt) bereitgestellt werden. Dadurch kann im ersten Netzwerk eine geeignete Maßnahme automatisch erfolgen. Beispielsweise kann eine Netzwerkverbindung durch einen durch das Schaltsignal angesteuerten Schalter unterbrochen werden, es kann die Stromversorgung dauerhaft oder kurzfristig, um einen Neustart zu erzwingen, unterbrochen werden, oder es kann ein eigensicherer Fehlerbetriebszustand aktiviert werden.

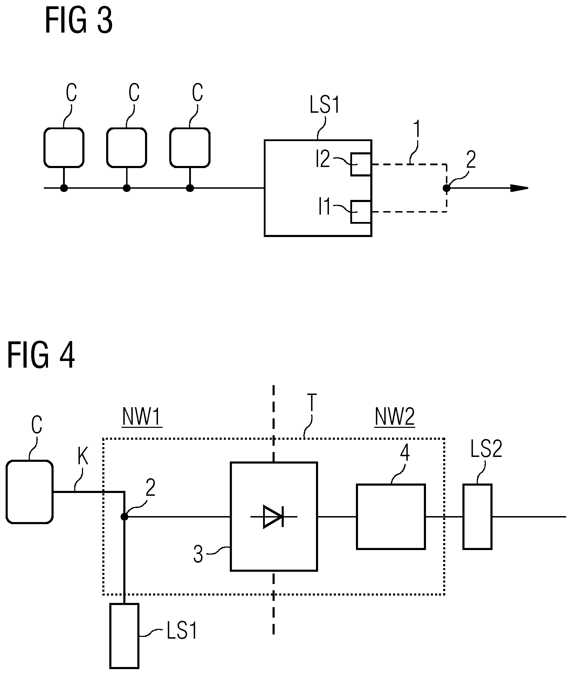

In Figur 3 ist ein erfindungsgemäßer Log-Server LS1 mit Leitungsschleife dargestellt. Es wird ein Nachrichtenstrom von Geräten C an den Log-Server LS1 im ersten Netzwerk NW1 übermittelt. Dieser Nachrichtenstrom kann Log-Nachrichten umfassen. Im Log-Server LS1 werden nur die Log-Nachrichten weiter prozessiert. Über eine Leitungsschleife 1, die zwischen einer ersten Schnittstelle I1 des Log-Servers zu einer zweiten Schnittstelle I2 des Log-Servers verläuft, können die Log-Nachrichten übermittelt werden. Dabei werden die Log-Nachrichten mittels einer Mithöreinrichtung 2 mitgehört und anschließend an das zweite Netzwerk NW2 (hier nicht dargestellt) übertragen. Um die Übertragung in das zweite Netzwerk NW2 möglichst effizient zu gestalten, wird die zweite Schnittstelle I2 der Leitungsschleife 1 mit einer Zieladresse versehen, die äquivalent zur Adresse des zweiten Log-Servers LS2 im zweiten Netzwerk NW2 ist. Der erste Log-Server übermittelt somit die Log-Nachrichten über die Leitungsschleife 1 an sich selbst. Parallel dazu werden mittels der Mithöreinrichtung 2 die Log-Nachrichten inklusive dieser Zieladresse mitgehört und in das zweite Netzwerk übertragen, wie in Figur 2 dargestellt. Im zweiten Netzwerk NW2 werden die Log-Nachrichten direkt an den zweiten Log-Server LS2 übertragen, da sie dessen Adresse als Zieladresse bereits eingetragen haben. Es ist keine weitere Filterung der Log-Nachrichten im zweiten Netzwerk notwendig.

Eine weitere vorteilhafte Ausführungsform der erfindungsgemäßen Übertragungsvorrichtung ist in Figur 4 gezeigt. Es wird über eine Kommunikationsverbindung K ein Nachrichtenstrom von Geräten C an den ersten Log-Server LS1 im ersten Netzwerk NW1 gesendet. Dieser Nachrichtenstrom wird mit Hilfe der Mithöreinrichtung 2 bei der Übertragung mitgehört und eine identische Kopie der Nachrichten erstellt. Der kopierte Nachrichtenstrom wird über die unidirektionale Einweg-Übertragungseinheit 3 in das zweite Netzwerk NW2 rückwirkungsfrei übertragen.

Im zweiten Netzwerk NW2 werden aus dem Nachrichtenstrom mit Hilfe einer Log-Nachrichten-Extraktionseinheit 4 die Log-Nachrichten erkannt und extrahiert und an den zweiten Log-Server LS2 weitergeleitet. Die Log-Nachrichten werden folglich aus dem kopierten Nachrichtenstrom gefiltert. Es kann eine weitere Filterung nach der Extraktion der Log-Nachrichten durchgeführt werden, wie zum Beispiel über voreingestellte Filter, die bestimmte Kategorien von Log-Nachrichten erkennen. Diese können anschließend im zweiten Log-Server LS2 archiviert oder analysiert werden.

Diese erfindungsgemäße Vorrichtung hat somit den entscheidenden Vorteil, dass die Log-Nachrichten von Geräten, die üblicherweise bereits erstellt und gesendet werden, direkt und unverändert an ein Diagnosenetzwerk übermittelt werden. Außerdem wird keine Anpassung des Systems oder der Geräte benötigt. Die vorgeschlagene Vorrichtung kann folglich einfach und ohne großen Aufwand an ein bereits bestehendes System angebunden werden. Die Überwachung und Diagnose wichtiger Log-Nachrichten werden ohne große zeitliche Verzögerung und rückwirkungsfrei erreicht.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum unmittelbaren und rückwirkungsfreien Übertragen von Log-Nachrichten aus mindestens einem ersten Netzwerk (NW1) in ein zweites Netzwerk (NW2), wobei:
- die Log-Nachrichten im ersten Netzwerk (NW1) von mindestens einem Gerät (C) an einen ersten Log-Server (LS1) übermittelt werden (S1),
- die Log-Nachrichten kontinuierlich mittels einer Mithöreinrichtung (2) mitgehört und die Log-Nachrichten einzeln und unverzüglich an das zweite Netzwerk (NW2) weitergeleitet werden (S2),
- jede einzelne, abgehörte Log-Nachricht über eine Einweg-Datenübertragungseinheit (3) rückwirkungsfrei vom ersten Netzwerk (NW1) in das zweite Netzwerk (NW2) übertragen wird (S3)
und
- die Log-Nachrichten im zweiten Netzwerk (NW2) einem zweiten Log-Server (LS2) bereitgestellt werden (S4),
wobei die mitgehörten und übermittelten Log-Nachrichten im zweiten Netzwerk ausgewertet werden und eine Integritätsprüfung der Log-Nachrichten durchgeführt wird.

2. Verfahren nach Anspruch 1, wobei der Nachrichtenstrom von Geräten (C) an den ersten Log-Server (LS1) im ersten Netzwerk (NW1), welcher Log-Nachrichten umfasst, ohne zeitliche Verzögerung mitgehört wird.

3. Verfahren nach Anspruch 1, wobei, abhängig vom Ergebnis der Auswertung der Log-Nachrichten im zweiten Netzwerk (NW2), Maßnahmen im ersten Netzwerk (NW1) eingeleitet werden.

4. Verfahren nach einem der vorangehenden Ansprüche, wobei der Nachrichtenstrom an einer Kommunikationsverbindung (K) zwischen mindestens einem Gerät (C) und dem ersten Log-Server (LS1) im ersten Netzwerk (NW1) abgehört werden.

5. Verfahren nach einem der vorangehenden Ansprüche, wobei aus dem mitgehörten Nachrichtenstrom die Log-Nachrichten mittels eines Filters erkannt und extrahiert werden.

6. Verfahren nach Anspruch 5, wobei die extrahierten Log-Nachrichten nach Relevanz gefiltert werden.

7. Verfahren nach den Ansprüchen 1 bis 3, wobei die Log-Nachrichten über eine Leitungsschleife (1) von einer ersten Schnittstelle (I1) zu einer zweiten Schnittstelle (I2) des ersten Log-Servers (LS1) übermittelt und an der Leitungsschleife (1) mit einer Mithöreinrichtung (2) mitgehört werden.

8. Verfahren nach Anspruch 7, wobei die zweite Schnittstelle (I2) der Leitungsschleife (1) des ersten Log-Servers (LS1) eine Adresse des zweiten Log-Servers (LS2) als Zieladresse hat.

9. Übertragungsvorrichtung (T) zum unmittelbaren und rückwirkungsfreien Übertragen von Log-Nachrichten aus mindestens einem ersten Netzwerk (NW1) in ein zweites Netzwerk (NW2), umfassend eine Mithöreinrichtung (2), eine Einweg-Datenübertragungseinheit (3) und eine im zweiten Netzwerk angeordnete Log-Nachrichten-Extraktionseinheit (4), wobei:
- die Mithöreinrichtung (2) derart ausgebildet ist die einzelnen Log-Nachrichten im ersten Netzwerk (NW1) kontinuierlich mitzuhören und die Log-Nachrichten einzeln und unverzüglich an das zweite Netzwerk (NW2) weiterzuleiten,
- die Einweg-Datenübertragungseinheit (3) derart ausgebildet ist, jede einzelne, mitgehörte Log-Nachricht rückwirkungsfrei vom ersten Netzwerk (NW1) an einen zweiten Log-Server (LS2) im zweiten Netzwerk (NW2) zu übertragen, wobei die mitgehörten und übermittelten Log-Nachrichten im zweiten Netzwerk ausgewertet werden und eine Integritätsprüfung der Log-Nachrichten durchgeführt wird.

10. Übertragungsvorrichtung (T) nach Anspruch 9, die derart ausgebildet ist, die Verfahrensschritte gemäß den Ansprüchen 2 bis 9 durchzuführen.

11. Übertragungsvorrichtung (T) nach den Ansprüchen 9 und 10, zusätzlich umfassend eine im zweiten Netzwerk angeordnete Log-Nachrichten-Extraktionseinheit (4), die derart ausgebildet ist, aus dem mitgehörten Nachrichtenstrom die Log-Nachrichten mittels eines Filters zu erkennen und zu extrahieren und dem zweiten Log-Server im zweiten Netzwerk bereitzustellen.

12. Log-Server (LS1) zum Empfang von Log-Nachrichten von mindestens einem Gerät (C), wobei der Log-Server (LS1) eine Leitungsschleife (1) von einer ersten Schnittstelle (I1) zu einer zweiten Schnittstelle (I2) des Log-Servers (LS1) umfasst, die derart ausgebildet ist, die Log-Nachrichten einzeln von der ersten Schnittstelle (I1) zur zweiten Schnittstelle (I2) zu übermitteln, wobei die zweite Schnittstelle (I2) eine Adresse eines zweiten Log-Servers (LS2) als Zieladresse hat und die Leitungsschleife derart ausgebildet ist, dass übermittelte Log-Nachrichten kontinuierlich von der Mithöreinrichtung mithörbar sind, wobei der Log-Server (LS1) und der zweite Log-Server (1s2) derart konfiguriert sind, gemeinsam die Schritte des Verfahrens nach einem der Ansprüche 1-8 auszuführen.

13. Log-Server nach Anspruch 12, umfassend ein Speichermedium.

14. Computerprogrammprodukt, das direkt in einen programmierbaren Computer ladbar ist, umfassend Programmcodeteile, die dazu geeignet sind, die Schritte des Verfahrens nach einem der Ansprüche 1 bis 8 durchzuführen.

## Claims

1. Method for immediate and reaction-free transmission of log messages from at least one first network (NW1) to a second network (NW2), wherein:
- the log messages are conveyed in the first network (NW1) from at least one device (C) to a first log server (LS1) (S1),
- the log messages are monitored continuously by means of a monitoring device (2), and the log messages are forwarded to the second network (NW2) individually and at once (S2),
- each individual monitored log message is transmitted from the first network (NW1) to the second network (NW2) in a reaction-free manner via a one-way data transmission unit (3) (S3), and
- the log messages are provided in the second network (NW2) to a second log server (LS2) (S4),
wherein the monitored and conveyed log messages are evaluated in the second network and an integrity check on the log messages is performed.

2. Method according to Claim 1, wherein the message stream from devices (C) to the first log server (LS1) in the first network (NW1), which message stream comprises log messages, is monitored without delay.

3. Method according to Claim 1, wherein, depending on the result of the evaluation of the log messages in the second network (NW2), measures are initiated in the first network (NW1) .

4. Method according to one of the preceding claims, wherein the message stream on a communication connection (K) between at least one device (C) and the first log server (LS1) is monitored in the first network (NW1).

5. Method according to one of the preceding claims, wherein the log messages from the monitored message stream are detected and extracted by means of a filter.

6. Method according to Claim 5, wherein the extracted log messages are filtered according to relevance.

7. Method according to Claims 1 to 3, wherein the log messages are conveyed via a line loop (1) from a first interface (I1) to a second interface (12) of the first log server (LS1) and monitored on the line loop (1) using a monitoring device (2).

8. Method according to Claim 7, wherein the second interface (12) of the line loop (1) of the first log server (LS1) has an address of the second log server (LS2) as destination address.

9. Transmission apparatus (T) for immediate and reaction-free transmission of log messages from at least one first network (NW1) to a second network (NW2), comprising a monitoring device (2), a one-way data transmission unit (3) and a log message extraction unit (4), which is arranged in the second network, wherein:
- the monitoring device (2) is designed to continuously monitor the individual log messages in the first network (NW1) and to forward the log messages to the second network (NW2) individually and at once,
- the one-way data transmission unit (3) is designed to transmit each individual monitored log message from the first network (NW1) to a second log server (LS2) in the second network (NW2) in a reaction-free manner, wherein the monitored and conveyed log messages are evaluated in the second network and an integrity check on the log messages is performed.

10. Transmission apparatus (T) according to Claim 9, designed to perform the method steps according to Claims 2 to 9.

11. Transmission apparatus (T) according to Claims 9 and 10, additionally comprising a log message extraction unit (4), arranged in the second network, that is designed to detect and extract the log messages from the monitored message stream by means of a filter and to provide them to the second log server in the second network.

12. Log server (LS1) for receiving log messages from at least one device (C), wherein the log server (LS1) comprises a line loop (1) from a first interface (I1) to a second interface (12) of the log server (LS1), which line loop is designed to convey the log messages from the first interface (I1) to the second interface (12) individually, wherein the second interface (12) has an address of a second log server (LS2) as destination address and the line loop is designed such that conveyed log messages are monitorable continuously by the monitoring device, wherein the log server (LS1) and the second log server (LS2) are configured to carry out the steps of the method according to one of Claims 1-8 together.

13. Log server according to Claim 12, comprising a storage medium.

14. Computer program product directly loadable into a programmable computer, comprising program code portions suitable for performing the steps of the method according to one of Claims 1 to 8.

## Revendications

1. Procédé de transmission directe et sans retour de messages de journal d'au moins un premier réseau (NW1) à un deuxième réseau (NW2), dans lequel :
- on transmet (S1) les messages de journal du premier réseau (NW1) d'au moins un appareil (C) à un premier serveur de journal (LS1),
- on écoute les messages de journal en continu au moyen d'un dispositif (2) d'écoute et on achemine (S2) les messages de journal individuellement et sans retard au deuxième réseau (NW2),
- on transmet (S3) chaque message de journal individuel écouté, par l'intermédiaire d'une unité (3) de transmission de donnée unidirectionnelle sans retour, du premier réseau (NW1) au deuxième réseau (NW2)
et
- on met (S4) les messages de journal du deuxième réseau (NW2) à disposition dans un deuxième serveur de journal (LS2),
dans lequel on exploite dans le deuxième réseau les messages de journal écoutés et transmis et on effectue un contrôle d'intégrité des messages de journal.

2. Procédé suivant la revendication 1, dans lequel on écoute, sans retard dans le temps, le flux de messages d'appareils (C) sur le premier serveur de messages (LS1) du premier réseau (NW1), qui comprend des messages de journal.

3. Procédé suivant la revendication 1, dans lequel, en fonction du résultat de l'exploitation des messages de journal dans le deuxième réseau (NW2), on prend des mesures dans le premier réseau (NW1).

4. Procédé suivant l'une des revendications précédentes, dans lequel on écoute le flux de messages sur une liaison (K) de communication entre au moins un appareil (C) et le premier serveur de journal (LS1) du premier réseau (NW1).

5. Procédé suivant l'une des revendications précédentes, dans lequel on détecte et on extrait au moyen d'un filtre les messages de journal du flux de messages écouté.

6. Procédé suivant la revendication 5, dans lequel on filtre les messages de journal extraits en fonction de leur pertinence.

7. Procédé suivant l'une des revendications 1 à 3, dans lequel on transmet les messages de journal par une boucle (1) de ligne d'une première interface (I1) à une deuxième interface (I2) du premier serveur de journal (LS1) et on les écoute sur la boucle (1) de ligne par un dispositif (2) d'écoute.

8. Procédé suivant la revendication 7, dans lequel la deuxième interface (I2) de la boucle (1) de ligne du premier serveur de messages (LS1) à une adresse du deuxième serveur de message (LS2) comme adresse cible.

9. Installation (T) de transmission pour la transmission directe et sans retour de messages de journal d'au moins un premier réseau (NW1) à un deuxième réseau (NW2), comprenant un dispositif (2) d'écoute, une unité (3) de transmission de donnée unidirectionnelle et une unité (4) d'extraction de messages de journal montée dans le deuxième réseau, dans laquelle :
- le dispositif (2) d'écoute est constitué pour écouter en continu les divers messages de journal dans le premier réseau (NW1) et pour acheminer les messages de journal individuellement et sans retard au deuxième réseau (NW2),
- l'unité (3) de transmission de donnée unidirectionnelle est constituée pour transmettre chaque message de journal individuel écouté sans retour du premier réseau (NW1) à un deuxième serveur de journal (LS2) du deuxième réseau (NW2), les messages de journal écoutés et transmis étant exploités dans le deuxième réseau et un contrôle d'intégrité des messages de journal étant effectué.

10. Installation (T) de transmission suivant la revendication 9, qui est constituée de manière à effectuer les stades du procédé suivant les revendications 2 à 9.

11. Installation (T) de transmission suivant les revendications 9 et 10, comprenant en outre une unité (4) d'extraction de message de journal montée dans le deuxième réseau, qui est constituée pour détecter au moyen d'un filtre, dans le courant de messages écoutés, les messages de journal et les en extraire et pour les mettre à disposition du deuxième serveur de journal du deuxième réseau.

12. Serveur de journal (LS1) pour la réception de messages de journal d'au moins un appareil (C), dans lequel le serveur (LS1) de journal comprend une boucle (1) de ligne allant d'une première interface (I1) à une deuxième interface (I2) du serveur de journal (LS1), qui est constituée de manière à transmettre les messages de journal individuellement de la première interface (I1) à la deuxième interface (I2), dans laquelle la deuxième interface (I2) a comme adresse cible une adresse d'un deuxième serveur de journal (LS2) et la boucle de ligne est conformée de manière à ce que des messages de journal transmis puissent être écoutés en continu par le dispositif d'écoute, le premier serveur de journal (LS1) et le deuxième serveur de journal (LS2) étant configurés pour effectuer conjointement les stades du procédé suivant l'une des revendications 1 à 8.

13. Serveur de journal suivant la revendication 12, comprenant un support de mémoire.

14. Produit de programme d'ordinateur qui peut être rechargé directement dans un ordinateur programmable, comprenant des parties de code de programme, qui sont propres à effectuer les stades du procédé suivant l'une des revendications 1 à 8.
